# EUROPÄISCHE PATENTSCHRIFT

(11) **EP 3 450 780 B1**
(45) Veröffentlichungstag und Bekanntmachung des Hinweises auf die Patenterteilung: **16.02.2022**
(21) Anmeldenummer: 18190275.0
(22) Anmeldetag: 22.08.2018
(51) Int. Cl.: F16C 19/06, G05G 1/02, G05G 1/08, H01H 13/52, H01H 13/58

(54) **VORRICHTUNG ZUR MECHANISCHEN BETÄTIGUNG EINER ELEKTRISCHEN ODER ELEKTRONISCHEN EINGABEEINHEIT**
DEVICE FOR MECHANICAL CONTROL OF AN ELECTRIC OR ELECTRONIC INPUT UNIT
DISPOSITIF D'ACTIONNEMENT MÉCANIQUE D'UNE UNITÉ D'ENTRÉE ÉLECTRIQUE OU ÉLECTRONIQUE

(30) Priorität: 05.09.2017 DE 102017120414
(43) Veröffentlichungstag der Anmeldung: 06.03.2019
(73) Patentinhaber: Marquardt GmbH, 78604 Rietheim-Weilheim (DE)
(72) Erfinder: Klaiber, Christof, 78054 Villingen-Schwenningen (DE); Huber, Matthias, 78187 Gutmadingen (DE); Kramer, Markus, 78549 Spaichingen (DE)
(74) Vertreter: Jostarndt Patentanwalts-AG

(56) Entgegenhaltungen:
- WO-A1-2012/093005
- DE-A1- 10 355 136
- DE-A1-102011 083 524
- DE-A1-102014 102 227
- US-A1- 2004 007 450

## Beschreibung

Betätigung einer elektrischen oder elektronischen Eingabeeinheit nach dem Oberbegriff des Anspruchs 1.

In vielen handelsüblichen Eingabeeinheiten, insbesondere in Mittelkonsoleneinheiten von Kraftfahrzeugen sind drehbar gelagerte Drehelemente im Einsatz, wobei durch Drehen des Drehelementes eine Datenauswahl in einem Display für eine Bedienperson ermöglicht wird. Dies ist häufig in Verbindung mit zentralen Multimediaeinheiten der Fall, wobei über derartige Eingabeelemente beispielsweise das Navigationsgerät, das Radiogerät, das Telefongerät, usw. zu bedienen sind. Nach Auswahl eines bestimmten Eingabedatums, beispielsweise eines Buchstabens, einer Zahl oder aber auch eines Menüinhaltes, kann diese Eingabe durch Bestätigung vollzogen werden. Diese Eingabe wird häufig durch Drücken des Drehelementes in axialer Richtung vorgenommen.

Dementsprechend muss in diesen Ausführungen die axiale Betätigung des Drehelementes mit einem definierten Weg, einer Rückstellung und einer dazu passenden Haptik vorgesehen sein.

Derartige Vorrichtungen sind in den Druckschriften WO 2012/093005 A1, DE 10 2014 102 227 A1, DE 10 2011 083 524 A1 und US 2004/0007450 beschrieben. US 2004/0007450 offenbart eine Vorrichtung zur mechanischen Betätigung einer elektrischen oder elektronischen Eingabeeinheit gemäß dem Oberbegriff von Anspruch 1.

Aufgabe der Erfindung ist es, eine verbesserte Vorrichtung der einleitend genannten Art vorzuschlagen, bei der mit kleinem Betätigungsweg eine hohe Präzision mit guter Haptik mit vertretbarem Fertigungsaufwand gewährleistet ist.

Diese Aufgabe wird ausgehend von einer Vorrichtung gemäß Anspruch 1 durch dessen kennzeichnende Merkmale gelöst.

Dementsprechend zeichnet sich eine erfindungsgemäße Vorrichtung zur mechanischen Betätigung einer elektrischen oder elektronischen Eingabeeinheit, insbesondere für Mittelkonsoleneinheiten von Kraftfahrzeugen, mit einem mittels eines Wälzlagers drehbar gelagerten Drehelement und mit einem Druckelement, das in axialer Richtung bewegbar ist, dadurch aus, dass die Vorrichtung 1 ein Federaufnahmeelement umfasst, das eine Spiralfeder durchsetzt und über eine Ringschulter einen Anschlag für die Spiralfeder bildet. Das Federaufnahmeelement liegt auf der der Ringschulter gegenüber liegenden Seite der Spiralfeder an einem Innenring eines Wälzlagers an.

Weiterhin ist das Wälzlager in axialer Richtung durch ein Lagerspannelement verspannt und ein Lagerring des Wälzlagers ist durch axiale Bewegung des Druckelementes gegen die Spannkraft des Lagerspannelementes axial bewegbar.

Da Wälzlager bereits mit hoher Fertigungspräzision und genau definiertem Lagerspiel für die axiale Vorspannung im Handel erhältlich sind, ergibt sich durch die Erfindung der Vorteil, diese Präzision ohne weitere aufwendige Maßnahmen für die axiale Betätigung des Druckelementes zu nutzen. Hierbei wird der axiale Weg sehr klein gehalten, wodurch eine gute Haptik, d.h. eines sicheres Feedback für die Bedienperson erzielt wird, wobei nur ein verschwindend kleiner Betätigungsweg zu durchlaufen ist.

Besonders vorteilhaft bei der Erfindung ist der Umstand, dass die zur drehbaren Lagerung des Drehelementes ohnehin vorhandenen Bauteile durch geschickte Anordnung diesen Zusatzeffekt bewirken.

In einer vorteilhaften Ausführung der Erfindung wird das Lagerspannelement des Wälzlagers zugleich als Rückstellelement für das axial bewegbare Druckelement verwendet, wodurch auch das Lagerspannelement eine Doppelfunktion erhält und somit die Konstruktion der erfindungsgemäßen Vorrichtung vereinfacht.

Als Lagerspannelement wird vorteilhafterweise eine Druckfeder, vorzugsweise eine Spiralfeder vorgesehen. Eine solche Spiralfeder bietet den Vorteil, dass sie problemlos hinsichtlich ihres Durchmessers an entsprechende Lagerringe angepasst werden kann.

Bei einer erfindungsgemäßen Vorrichtung wird ein Wälzlager verwendet, dass als Kugellager ausgebildet ist, bei dem durch die Geometrie der Lagerkugeln, und wenigstens eines Lagerrings ein begrenztes axiales Lagerspiel in axialer Bewegungsrichtung vorgesehen ist.

Bei Verwendung eines solchen Wälzlagers ist über das vorgegebene axiale Lagerspiel auch die axiale Bewegungsrichtung des Druckelementes begrenzt.

Mit Auswahl eines entsprechenden Wälzlagers ist in einer vorteilhaften Weiterbildung der Erfindung dadurch keine weitere Begrenzung oder sonstige Gestaltung des axialen Betätigungswegs des Druckelementes erforderlich, sodass mit der Auswahl des Wälzlagers mit der drehbaren Lagerung des Drehelementes zugleich auch die axiale Bewegung des Druckelementes definiert ist.

In einer nicht zur beanspruchten Erfindung gehörenden Ausführung ist das Drehelement zugleich als Druckelement vorgesehen, d. h. mit dem gleichen Element wird sowohl die Drehbewegung als auch die axiale Translationsbewegung ausgeführt. Gemäß der beanspruchten Erfindung kann das Druckelement jedoch auch verschieden vom Drehelement ausgeführt sein und unabhängig vom Drehelement auf einen der Lagerringe zur axialen Betätigung einwirken Vorteilhafterweise werden ein oder mehrere Sensoreinheiten zur elektrischen oder elektronischen Erfassung der Winkelposition des Drehelementes und/oder der Axialposition des Druckelementes vorgesehen. Diese werden mit einer elektronischen Auswertungseinheit verbunden, die eine zugehörige Anzeige ansteuert, anhand deren bildlicher Darstellung eine Bedienperson durch Drehen des Drehelementes eine Auswahl einzugebender Daten oder Steuerbefehle treffen kann.

In einer Weiterbildung der erfindungsgemäßen Vorrichtung werden weiterhin ein und/oder mehrere Aktoreinheiten vorgesehen, um abhängig von der Betätigung des Drehelementes und/oder des Druckelementes angewählte Aktionen auszulösen.

Die Auswahl von einzugebenden Daten und/oder Steuerbefehlen wird dabei bevorzugt durch Drehen des Drehelementes vorgenommen, wobei die ausgewählten Daten und/oder Steuerbefehle anschließend durch axiales Drücken des Druckelementes bestätigt bzw. eingegeben werden.

Ein Ausführungsbeispiel der Erfindung ist in der Zeichnung dargestellt und wird anhand der Figuren nachfolgend näher erläutert.

Im Einzelnen zeigen
Figur 1 eine Explosivdarstellung einer erfindungsgemäßen Vorrichtung in perspektivische Ansicht und
Figur 2 eine Schnittdarstellung der Vorrichtung gemäß Figur 1.

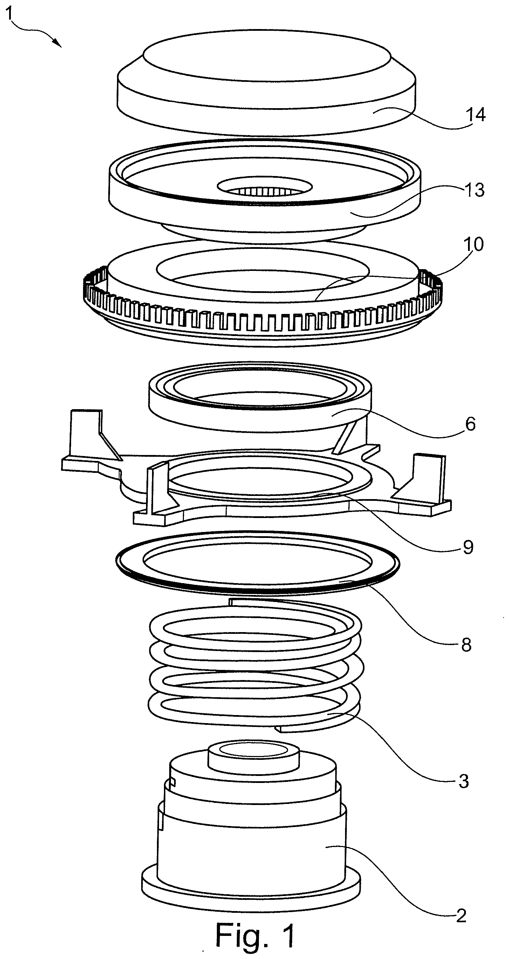

Die Vorrichtung 1 gemäß Figur 1 umfasst ein Federaufnahmeelement 2, das eine Spiralfeder 3 durchsetzt und über eine Ringschulter 4 einen Anschlag für die Spiralfeder 3 bildet. Das Federaufnahmeelement 2 liegt auf der der Ringschulter 4 gegenüber liegenden Seite der Spiralfeder 3 an einem Innenring 5 eines Wälzlagers 6 an.

Das Wälzlager 6 ist vorliegend als Kugellager mit Lagerkugeln 7 ausgebildet. Die Spiralfeder 3 wirkt über einen Druckring 8 und einen Zwischenring 9 auf einen gerändelten Drehring 10 ein, der wiederum über eine Ringschulter 11 auf der Oberseite eines Außenrings 12 des Wälzlagers 6 anliegt.

Auf dem Drehring 10 liegt ein Aufnahmering 13 für ein Druckelement 14 auf.

Die Vorspannung des Wälzlagers 6 über die Spiralfeder 3 ist in der Figur nicht näher dargestellt.

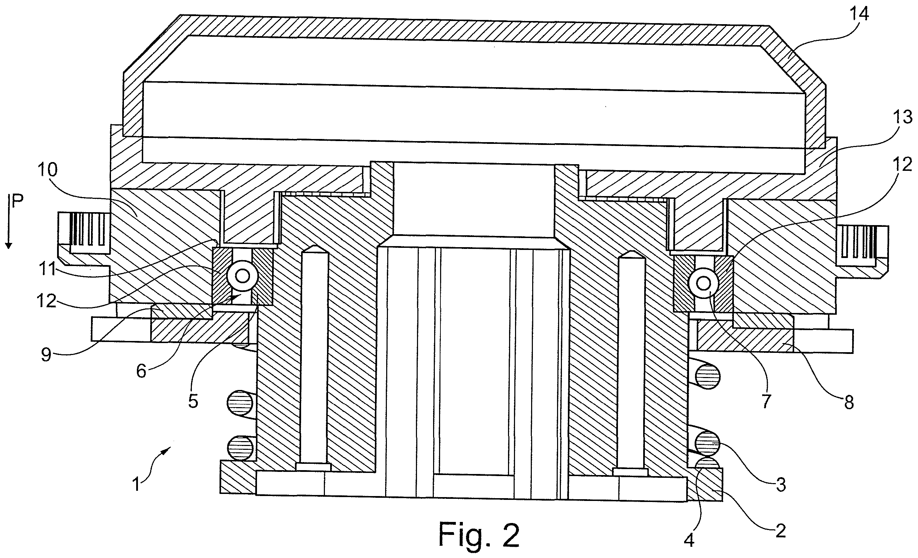

Erkennbar ist jedoch die drehbare Lagerung des Drehrings 10 gegenüber dem Federaufnahmeelement 2. Der Drehring 10 bildet somit ein erfindungsgemäßes Drehelement. Über eine Druckbetätigung auf das Druckelement 14 in Richtung des Pfeils P kann somit über die Ringschulter 11 der Außenring 12 des Wälzlagers 6 entgegen der Rückstellkraft der Spiralfeder 3 nach unten gedrückt werden. Dieser Betätigungsweg ist minimal und durch das axiale Spiel des Wälzlagers 6 begrenzt. Dieses Spiel ist so klein, dass es in der Zeichnung gemäß Figur 2 nicht mehr erkennbar ist.

Es ist jedoch klar, dass ein entsprechend sensitiver Sensor und/oder Aktor diese axiale Bewegung in Richtung des Pfeils P, beispielsweise an der Unterseite des Druckrings 8 erfassen und an eine entsprechende Auswerteeinheit zur Bestätigung einer Datenauswahl oder Eingabe eines Steuerbefehls weiterleiten kann.

Somit zeigt dieses Ausführungsbeispiel eine Möglichkeit zur Realisierung der erfindungsgemäßen Vorteile, nämlich die drehbare Lagerung für ein Eingabeelement sowie Bereitstellung eines definierten Betätigungsweges zur Druckbetätigung in axialer Richtung, wobei beide Effekte durch ein Präzisionskugellager erzielt werden.

### Bezugszeichenliste:

- 1.: Vorrichtung
- 2.: Federaufnahmeelement
- 3.: Spiralfeder
- 4.: Ringschulter
- 5.: Innenring
- 6.: Wälzlager
- 7.: Lagerkugel
- 8.: Druckring
- 9.: Zwischenring
- 10.: Drehring
- 11.: Ringschulter
- 12.: Außenring
- 13.: Aufnahmering
- 14.: Druckelement

## Patentansprüche

1. Vorrichtung zur mechanischen Betätigung einer elektrischen oder elektronischen Eingabeeinheit, insbesondere für Mittelkonsoleinheiten von Kfz, mit einem mittels eines Wälzlagers drehbar gelagerten Drehelement, wobei ein Druckelement zur Betätigung der Vorrichtung in axialer Richtung vorgesehen ist, wobei das Wälzlager 6 in axialer Richtung durch ein Lagerspannelement 3 verspannt ist und dass ein Lagerring 12 des Wälzlagers 6 durch axiale Bewegung des Druckelementes 14 innerhalb des Lagerspiels des Wälzlagers 6 axial bewegbar ist, wobei die Vorrichtung 1 ein Federaufnahmeelement 2 umfasst, das eine Spiralfeder 3 durchsetzt und über eine Ringschulter 4 einen Anschlag für die Spiralfeder 3 bildet, wobei das Federaufnahmeelement 2 auf der der Ringschulter 4 gegenüber liegenden Seite der Spiralfeder 3 an einem Innenring 5 eines Wälzlagers 6 anliegt, wobei das Wälzlager 6 als Kugellager mit Lagerkugeln 7 ausgebildet ist und die Spiralfeder 3 über einen Druckring 8 und einen Zwischenring 9 auf einen gerändelten Drehring 10 einwirkt, der wiederum über eine Ringschulter 11 auf der dem Druckring 8 und dem Zwischenring 9 gegenüberliegenden Seite eines Außenrings 12 des Wälzlagers 6 anliegt, **dadurch gekennzeichnet, dass** das Druckelement unabhängig vom Drehelement mit einem Lagerring in Wirkverbindung steht.

2. Vorrichtung nach Anspruch 1, **dadurch gekennzeichnet, dass** Lagerspannelement 3 des Wälzlagers 6 zugleich ein Rückstellelement für das axial bewegbare Druckelement 14 ist.

3. Vorrichtung nach einem der Ansprüche 1 oder 2, **dadurch gekennzeichnet, dass** das Drehelement als Druckelement ausgebildet ist.

4. Vorrichtung nach einem der vorgenannten Ansprüche **dadurch gekennzeichnet, dass** das Lagerspannelement eine Druckfeder, vorzugsweise eine Spiralfeder 3 ist.

5. Vorrichtung nach einem der vorgenannten Ansprüche, **dadurch gekennzeichnet, dass** das Wälzlager 6 durch die Geometrie der Wälzkörper 7 und wenigstens eines Lagerrings 5,12 ein begrenztes axiales Lagerspiel in axialer Bewegungsrichtung P des Druckelementes aufweist.

6. Vorrichtung nach einem der vorgenannten Ansprüche, **dadurch gekennzeichnet, dass** der Betätigungsweg des Druckelementes in axialer Richtung durch das axiale Lagerspiel begrenzt ist.

7. Vorrichtung nach einem der vorgenannten Ansprüche, dass ein oder mehrere Sensoreinheiten zur elektrischen oder elektronischen Erfassung der Winkelposition des Drehelementes und/oder der Axialposition des Druckelementes und/oder ein oder mehrere Aktoreinheiten zur Auslösung ausgewählter Aktionen durch das Drehelement und/oder das Druckelement vorhanden sind.

8. Vorrichtung nach einem der vorgenannten Ansprüche **dadurch gekennzeichnet, dass** durch Drehung des Drehelementes Eingabedaten anwählbar sind.

9. Vorrichtung nach einem der vorgenannten Ansprüche **dadurch gekennzeichnet, dass** durch axiale Bewegung eine Betätigung des Druckelementes für eine Dateneingabe auslösbar ist.

## Claims

1. Device for mechanical actuation of an electrical or electronic input unit, in particular for centre console units of motor vehicles, with a rotary element rotatably mounted by means of a roller bearing, wherein a thrust element is provided for actuating the device in the axial direction, wherein the roller bearing 6 is braced in the axial direction by a bearing tensioning element 3, and in that a bearing ring 12 of the roller bearing 6 is axially movable within the bearing clearance of the roller bearing 6 by axial movement of the thrust element 14, wherein the device 1 comprises a spring receiving element 2 which passes through a spiral spring 3 and forms a stop for the spiral spring 3 via an annular shoulder 4, wherein the spring receiving element 2, on the side of the spiral spring 3 opposite the annular shoulder 4, bears against an inner ring 5 of a roller bearing 6, wherein the roller bearing 6 is in the form of a ball bearing with bearing balls 7 and the spiral spring 3 acts on a knurled rotary ring 10 via a thrust ring 8 and an intermediate ring 9, which in turn bears via an annular shoulder 11 on the side of an outer ring 12 of the roller bearing 6 opposite the thrust ring 8 and the intermediate ring 9, **characterized in that** the thrust element is operatively connected to a bearing ring independently of the rotary element.

2. Device according to claim 1, **characterised in that** the bearing clamping element 3 of the roller bearing 6 is at the same time a return element for the axially movable pressure element 14.

3. Device according to one of claims 1 or 2, **characterised in that** the rotary element is designed as a pressure element.

4. Device according to one of the aforementioned claims, **characterised in that** the bearing tensioning element is a compression spring, preferably a spiral spring 3.

5. Device according to one of the aforementioned claims, **characterised in that** the rolling bearing 6 has a limited axial bearing clearance in the axial direction of movement P of the pressure element due to the geometry of the rolling bodies 7 and at least one bearing ring 5,12.

6. Device according to one of the preceding claims, **characterised in that** the actuating travel of the pressure element in the axial direction is limited by the axial bearing clearance.

7. Device according to one of the preceding claims, that one or more sensor units for electrical or electronic detection of the angular position of the rotary element and/or the axial position of the pressure element and/or one or more actuator units for triggering selected actions by the rotary element and/or the pressure element are present.

8. Device according to one of the aforementioned claims, **characterised in that** input data can be selected by rotating the rotary element.

9. Device according to one of the aforementioned claims, **characterised in that** an actuation of the pressure element for a data input can be triggered by axial movement.

## Revendications

1. Dispositif pour l'actionnement mécanique d'une unité d'entrée électrique ou électronique, en particulier pour des unités de console centrale de véhicules automobiles, avec un élément rotatif logé de manière rotative au moyen d'un palier à roulement, un élément de pression étant prévu pour l'actionnement du dispositif dans la direction axiale, le palier de laminage 6 étant serré dans la direction axiale par un élément de serrage de palier 3 et en ce qu'une bague de palier 12 du palier de laminage 6 peut être déplacée axialement par un mouvement axial de l'élément de pression 14 à l'intérieur du jeu de palier du palier de laminage 6, le dispositif 1 comprenant un élément de réception de ressort 2 qui traverse un ressort spiral 3 et forme une butée pour le ressort spiral 3 via un épaulement annulaire 4, l'élément de réception de ressort 2 s'appuie, du côté du ressort spiral 3 opposé à l'épaulement annulaire 4, sur une bague intérieure 5 d'un palier de laminage 6, le palier de laminage 6 étant conçu comme un roulement à billes avec des billes de roulement 7 et le ressort spiral 3 agissant, par l'intermédiaire d'une bague de pression 8 et d'une bague intermédiaire 9, sur une bague rotative moletée 10, qui s'applique à son tour, par l'intermédiaire d'un épaulement annulaire 11, sur le côté opposé à la bague de pression 8 et à la bague intermédiaire 9 d'une bague extérieure 12 du palier de laminage 6, **caractérisé en ce que** l'élément de pression est en liaison active avec une bague de palier indépendamment de l'élément rotatif.

2. Dispositif selon la revendication 1, **caractérisé en ce que** l'élément de serrage de palier 3 du palier de laminage 6 est en même temps un élément de rappel pour l'élément de pression 14 mobile axialement.

3. Dispositif selon l'une des revendications 1 ou 2, **caractérisé en ce que** l'élément rotatif est conçu comme un élément de pression.

4. Dispositif selon l'une des revendications précédentes, **caractérisé en ce que** l'élément de serrage du palier est un ressort de compression, de préférence un ressort spiral 3.

5. Dispositif selon l'une des revendications précédentes, **caractérisé en ce que** le palier de laminage 6 présente un jeu de palier axial limité dans la direction de déplacement axial P de l'élément de pression grâce à la géométrie des corps de laminage 7 et d'au moins une bague de palier 5,12.

6. Dispositif selon l'une des revendications précédentes, **caractérisé en ce que** la course d'actionnement de l'élément de pression dans la direction axiale est limitée par le jeu axial du palier.

7. Dispositif selon l'une des revendications précédentes, en ce qu'il existe une ou plusieurs unités de capteurs pour la détection électrique ou électronique de la position angulaire de l'élément rotatif et/ou de la position axiale de l'élément de pression et/ou une ou plusieurs unités d'actionneurs pour le déclenchement d'actions sélectionnées par l'élément rotatif et/ou l'élément de pression.

8. Dispositif selon l'une des revendications précédentes, **caractérisé en ce que** des données d'entrée peuvent être sélectionnées par rotation de l'élément rotatif.

9. Dispositif selon l'une des revendications précédentes, **caractérisé en ce qu'**un actionnement de l'élément d'impression pour une entrée de données peut être déclenché par un mouvement axial.
